# DEMANDE DE BREVET EUROPEEN

(11) **EP 1 916 598 A1**
(43) Date de publication de la demande: **30.04.2008**
(21) Numéro de dépôt: 06291665.5
(22) Date de dépôt: 23.10.2006
(51) Int. Cl.: G06F 9/445

(54) **Méthode de chargement et de gestion d'une application dans un équipement mobile**

(71) Demandeur: Nagravision S.A., 1033 Cheseaux-sur-Lausanne (CH)
(72) Inventeur: Wendling, Bertrand, 78220 Viroflay (FR)
(74) Mandataire: Leman Consulting S.A.

(57) **Abrégé**

La présente invention décrit une méthode de chargement et de gestion d'une application logicielle dans un équipement mobile destiné à recevoir des données numériques de services de télévision mobile diffusés comprenant un logiciel de base stocké dans une mémoire et au moins un module de sécurité. L'application est associée aux services de télévision mobile diffusés. La méthode, comprenant une étape préalable de transmission au centre de gestion de données d'identification de l'équipement mobile et du module de sécurité lors de la connexion de l'équipement au réseau, est caractérisée en ce que le logiciel de base de l'équipement mobile lit un ensemble de données stockées dans le module de sécurité désignant un serveur d'un centre de gestion apte à fournir à l'équipement mobile l'application ou une mise à jour de ladite application par téléchargement dans ledit équipement. L'objet de l'invention porte également sur un module de sécurité pour équipement mobile comprenant contenant au moins un ensemble de données désignant un serveur d'un centre de gestion.

## Description

### Domaine de l'invention

La présente invention concerne le domaine des équipements mobiles comprenant une ou plusieurs applications logicielles destinées à protéger et à sécuriser des services numériques diffusés tel que par exemple de la télévision à péage interactive, des contenus audio, des jeux, des logiciels ou des services d'informations continues tel que les prévisions météorologiques, les cours de la bourse, les résultats sportifs ou autres.

### Arrière plan de l'invention

La notion d'équipement mobile est prise au sens large et désigne un appareil tel que par exemple, un téléphone portable, un assistant personnel PDA (Personal Digital Assistant), un récepteur portable de télévision numérique, un ordinateur portable, etc.

Un équipement mobile comporte en général au moins un module de sécurité amovible servant d'une part à identifier l'équipement lors de sa connexion à un réseau et d'autre part à contrôler l'accès aux services diffusés par le réseau. Ce module de sécurité est connu sous l'appellation carte SIM (Subscriber Identity Module) ou USIM (Universal Subscriber Identity Module) pour des équipements de 3^{ème} génération aptes à se connecter au réseau UMTS (Universal Mobile Telecommunications System) ou encore RUIM (Re-Usable Identification Module) pour des équipements conçus pour accéder à un réseau CDMA (Code Division Multiple Access).

A la fabrication et/ou lors d'une phase de personnalisation du module de sécurité, l'opérateur gérant le réseau et les services diffusés introduit un identificateur du type IMSI (International Mobile Subscriber Identification) servant à identifier d'une manière sûre et unique chaque abonné désirant se connecter sur un réseau mobile.

De plus, chaque équipement mobile est identifié physiquement par un numéro stocké dans une mémoire non volatile de l'équipement. Ce numéro, appelé IMEI, (International Mobile Equipment Identifier) contient une identification du type de l'équipement mobile et un numéro de série servant à identifier de manière unique un équipement mobile donné sur un réseau du type GSM (Global System for Mobile communications), GPRS (General Packet Radio System) UMTS, (Universal Mobile Télécommunications System), 3GPP (3rd Génération Partnership Project) ou autre. Un équipement mobile est également caractérisé par une version de logiciel SVN (Software Version Number) indiquant l'état de mise à jour du logiciel de base installé sur l'équipement mobile. La combinaison de l'identification du type et du numéro de série de l'équipement mobile avec la version de logiciel (SVN) donne une nouvelle identification, appelée IMEISV (International Mobile Equipment Identifier and Software Version Number). Dans le cas de réseaux mobiles IP (Internet Protocol) du type WLAN (Wireless Local-Area Network), WiFi (Wireless Fidelity) ou autre, l'identifiant physique peut être une adresse MAC (Media Access Control) qui correspond à l'adresse unique identifiant la configuration du matériel d'un utilisateur sur le réseau et la version de logiciel peut être transmise par des protocoles de couche supérieure basés sur IP.

Lors de la mise en service d'un équipement mobile, plus particulièrement lors de sa connexion au réseau d'un opérateur, des informations comprenant les données d'identification sont échangées entre l'équipement mobile et le centre de gestion de l'opérateur qui autorise ou non son utilisation. Comme les services offerts aux utilisateurs deviennent de plus en plus évolués, leur sécurité doit être augmentée en proportion afin de prémunir les utilisateurs et les opérateurs contre les fraudes causées par des tiers cherchant à obtenir un accès ou des prestations de manière illicite.

Les services de télévision mobile, dans le cadre de la norme ETSI TS 102 474 "IP Datacast over DVB-H: Service Purchase and Protection (SPP)" impliquent l'utilisation d'une application de sécurité propriétaire dans l'équipement mobile. Selon la norme, cette application peut être définie sous forme d'une application Java chargée dans l'équipement pour s'exécuter sur une Machine Virtuelle Java. L'application communique avec les éléments de l'équipement mobile (pile IP, carte SIM, écran, clavier, etc...) via des interfaces API (Application Programming Interface) normalisées par l'environnement JAVA.

Actuellement; l'application permettant la protection et la sécurité des données diffusées par les services de télévision mobile est installée dans l'équipement mobile lors de la fabrication de celui-ci et elle est dédiée à un marché spécifique. La norme ETSI TS 102 474 ne prévoit aucun moyen de charger cette application dans l'équipement par exemple lors de sa première mise en service ou connexion sur le réseau.

Il est à noter que les applications installées dans un équipement mobile ne fonctionnent pas nécessairement dans une structure basée sur l'environnement JAVA. Elles peuvent aussi être chargées, par exemple, sous forme de code binaire en utilisant des ressources fournies par un système d'exploitation tel que MS-Windows-CE, Linux etc.

### Description sommaire de l'invention

Le but de la présente invention est de fournir la possibilité de charger une application de sécurité pour des services de télévision diffusés dans un équipement mobile de configuration générique tout en respectant les spécifications normalisées.

Ce but est atteint par une méthode de chargement et de gestion d'une application logicielle dans un équipement mobile destiné à recevoir des données numériques de services de télévision mobile diffusés comprenant un logiciel de base stocké dans une mémoire et au moins un module de sécurité, ladite application étant associée aux services de télévision mobile diffusés, la méthode, comprenant une étape préalable de transmission au centre de gestion de données d'identification de l'équipement mobile et du module de sécurité lors de la connexion de l'équipement au réseau, est caractérisée en ce que le logiciel de base de l'équipement mobile lit un ensemble de données stockées dans le module de sécurité désignant un serveur d'un centre de gestion apte à fournir à l'équipement mobile l'application ou une mise à jour de ladite application par téléchargement dans ledit équipement.

L'objet de l'invention porte également sur un module de sécurité pour équipement mobile destiné à recevoir des données numériques de services de télévision mobile diffusés caractérisé en ce qu'il comprend une mémoire dans laquelle est stocké au moins un ensemble de données désignant un serveur d'un centre de gestion apte à fournir à l'équipement mobile une application ou une mise à jour de ladite application par téléchargement dans ledit équipement.

Selon une réalisation préférée, le module de sécurité de l'équipement mobile contient une adresse IP d'un serveur apte à fournir au moins une application de sécurité servant à protéger les données des services de télévision mobile diffusés. Lors de la connexion de l'équipement mobile à un centre de gestion d'un opérateur via un réseau mobile, celui-ci transmet des données d'identification de l'équipement et du module de sécurité. Le centre de gestion autorise alors la connexion de l'équipement à un serveur dont l'adresse est contenue dans le module de sécurité pour télécharger l'application de sécurité adaptée à la configuration de l'équipement mobile et aux services offerts par l'opérateur.

Le serveur désigné par l'adresse IP peut également fournir des applications complètes incluant des moyens de sécurité, comme par exemple une application de télévision mobile à péage, qu'un utilisateur peut télécharger dans l'équipement mobile. A cette application de télévision mobile peuvent s'ajouter des applications commerciales spécifiques à l'opérateur et comportant des commandes appropriées permettant à l'utilisateur d'acheter des programmes selon le mode PPV (Pay-Per-View) et/ou selon le mode PPT (Pay-Per-Time) ou encore de s'abonner à un ou plusieurs services mis à disposition par l'opérateur.

Cette adresse IP est enregistrée dans le module de sécurité lors de sa fabrication ou plutôt lors des étapes de personnalisation pendant lesquelles des identifiants comme l'IMSI sont inscrits.

### Brève description des figures

L'invention sera mieux comprise grâce à la description détaillée qui va suivre et qui se réfère aux dessins annexés qui sont donnés à titre d'exemple nullement limitatif, à savoir:
La figure 1 illustre un schéma bloc général de l'architecture du système comprenant un centre de gestion et au moins un équipement mobile connecté à un réseau mobile de diffusion du type DVB-H et à un réseau mobile bidirectionnel du type UMTS.
La figure 2 illustre un schéma bloc des applications et des unités mises en oeuvre pour sécuriser les communications entre le centre de gestion et un équipement mobile muni d'un module de sécurité.

### Description détaillée de l'invention

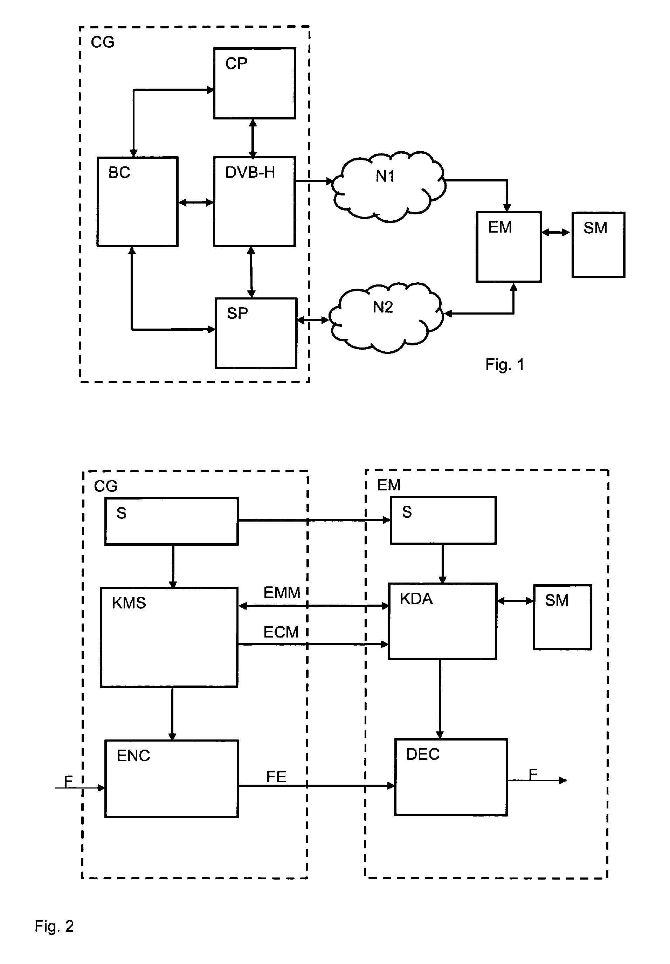

L'invention s'applique plus particulièrement dans un système appelé IP Datacast utilisé par DVB (Digital Video Broadcasting) pour créer des services DVB-H (Digital Video Broadcasting - Handheld ou Diffusion Vidéo Numérique - Portable). Ces derniers sont intégrés dans un réseau hybride composé d'un réseau mobile du type GPRS, UMTS (N2) ou autre et d'un réseau de diffusion unidirectionnelle de services DVB-H (N1) comme illustré par la figure 1.

Le centre de gestion (CG) comprend une unité de contrôle du contenu (CP) chargée de coder, stocker et préparer le contenu à diffuser via le réseau unidirectionnel (N1), une unité de traitement (DVB-H) chargée de la création d'un flux transportant le contenu combiné avec des données fournies par l'unité de protection du contenu et des services (SP). Cette dernière encrypte le contenu, gère les droits d'accès au contenu et communique avec l'équipement mobile (EM) via le réseau bidirectionnel (N2). Ces unités interconnectées sont pilotées par une unité de contrôle de diffusion (BC) contrôlant quel contenu est diffusé à une heure donnée avec quels critères d'accès. L'équipement mobile (EM) connecté aux deux réseaux (N1, N2) muni d'un module de sécurité (SM) décrypte le contenu diffusé dans le flux préparé par l'unité (DVB-H) en fonction des droits enregistrés dans le module de sécurité (SM).

Selon un exemple, à l'enclenchement, l'équipement mobile identifie les services disponibles grâce à un guide de service (ESG) Electronic Services Guide. L'utilisateur commande un des services disponibles via une transaction sécurisée avec le fournisseur du service qui détermine si le service sera diffusé de manière unidirectionnelle via une partie du flux DVB-H ou si le service sera fourni par le réseau mobile bidirectionnel interactif. Ce choix est fait sur la base de mesures d'audience du service et permet une distribution optimale de la capacité du flux DVB-H en fonction du nombre d'utilisateurs actifs dans une zone donnée. L'accès au contenu diffusé est contrôlé sur la base des doits acquis par les utilisateurs.

Selon une réalisation préférée, le système de sécurité d'un équipement mobile destiné à recevoir des services de télévision à péage est basé sur une structure appelée Open Security Framework permettant une compatibilité avec différentes solutions de systèmes de gestion de clés (KMS) Key Management system. Ces systèmes situés au centre de gestion (CG) sont chargés à la fois de la gestion des droits des utilisateurs par le biais de message d'administration EMM (Entiltlement Management Messages) et de la gestion, par le biais de messages de contrôle ECM (Entitlement Control Message), des clés d'encryption des contenus diffusés. La figure 2 montre un schéma bloc des applications utilisées pour la protection des données échangées entre le centre de gestion (CG) et l'équipement mobile (EM).

Le centre de gestion (CG) comprend un système de gestion de clés (KMS) contrôlé par des informations de session (S) relatives au service sélectionné transmettant des messages EMM et ECM vers l'équipement mobile. Ce système est également chargé d'encrypter le flux avec unité d'encryption (ENC) avant sa diffusion avec des clés incluses dans les messages ECM transmis.

Au niveau de l'équipement mobile (EM), une interface de sécurité appelée KDA (Key Management System Device Agent) peut être installée dans un environnement Java et considérée comme application Java capable d'accéder aux ressources de sécurité de l'équipement mobile (EM).

L'application de sécurité KDA contient des paramètres spécifiques à un opérateur ou à un fournisseur de sécurité nécessaires au contrôle de la décryption des données et adaptés à un système de gestion de clés (KMS) particulier. Elle assure les fonctions de sécurité suivantes:
- réception de messages EMM transmis par le système KMS via le réseau unidirectionnel de diffusion ou via le réseau mobile bidirectionnel.
- génération sécurisée d'autorisations d'accès à partir des messages EMM reçus.
- réception de flux de messages ECM correspondant à un service sélectionné sur le réseau de diffusion.
- génération sécurisée des clés de décryption du contenu diffusé à partir des messages ECM du flux.
- application des clés à l'unité de décryption (DEC) de l'équipement mobile (EM) et contrôle de la décryption du contenu du service reçu.

L'application KDA dialogue avec le module de sécurité de l'équipement lors de chaque opération de sécurité telle que la gestion des droits d'accès issus des messages EMM ou l'extraction des clés de décryption des messages ECM.

Un avantage de la présente invention est la possibilité de fournir des équipements mobiles de configuration générique comprenant un logiciel de base et un module de sécurité adéquat.

L'application de sécurité (KDA) ou tout autre application à télécharger dans l'équipement mobile (EM) via l'adresse IP du module de sécurité peut être spécifique soit au type et/ou la version du module de sécurité (SM), soit au modèle et/ou la version de l'équipement mobile ou aux deux caractéristiques à la fois. Ces dernières sont transmises au centre de gestion par l'intermédiaire de l'IMSI et de l'IMEISV, soit lors de la connexion de l'équipement mobile au réseau, soit dans une requête de téléchargement ou soit après interrogation de l'équipement par le centre de gestion lors de mises à jour de l'application. Une telle interrogation peut être effectuée régulièrement lorsqu'une maintenance rigoureuse de l'application est demandée par les fournisseurs de services.

Selon une autre configuration, l'application installée dans l'équipement mobile peut vérifier automatiquement à des périodes prédéterminées la disponibilité de mises à jour, via l'adresse IP stockée dans le module de sécurité, afin de les télécharger le cas échéant.

Selon une variante, l'adresse IP peut être spécifique à un module de sécurité donné selon le fabricant, le modèle, la version, etc.

Une mise à jour peut être soit optionnelle ou obligatoire et dans ce cas le module de sécurité peut bloquer ou restreindre certaines fonctionnalités d'accès aux données de services diffusés jusqu'à l'exécution de la mise à jour.

La mise à jour peut être initialisée par un message encrypté avec une clé connue du module de sécurité transmis par le centre de gestion. Le module de sécurité peut ainsi comparer et vérifier la version de l'application installée dans l'équipement mobile avec celle disponible sur le serveur du centre gestion avec les informations contenues dans le message. Lorsque la version disponible est supérieure à la version installée, le module de sécurité transmet à l'application une commande de téléchargement via l'adresse IP.

Lorsque la version chargée ne peut pas être authentifiée par l'intermédiaire d'une signature générée par le module de sécurité et celle fournie par le serveur, c'est-à-dire que la comparaison des signatures donne une différence, le module peut aussi restreindre ou bloquer des fonctions de l'équipement mobile.

Cette mesure de sécurité permet au centre de gestion ou à l'opérateur de détecter des tentatives de piratage de l'application.

Selon une variante au lieu de bloquer l'équipement mobile, le module de sécurité peut générer un message court du type SMS (Short Message Service) à destination de l'opérateur annonçant une tentative de fraude de la part de l'utilisateur. Lorsque ces messages deviennent nombreux pour un identificateur de module de sécurité donné, l'opérateur peut soit suspendre tous les droits d'accès ou l'abonnement aux services diffusés, soit envoyer des messages d'avertissement indiquant que l'opérateur a identifié l'utilisateur ayant piraté son équipement mobile.

## Revendications

1. Méthode de chargement et de gestion d'une application logicielle dans un équipement mobile destiné à recevoir des données numériques de services de télévision mobile diffusés comprenant un logiciel de base stocké dans une mémoire et au moins un module de sécurité, ladite application étant associée aux services de télévision mobile diffusés, la méthode, comprenant une étape préalable de transmission au centre de gestion de données d'identification de l'équipement mobile et du module de sécurité lors de la connexion de l'équipement au réseau, est **caractérisée en ce que** le logiciel de base de l'équipement mobile lit un ensemble de données stockées dans le module de sécurité désignant un serveur d'un centre de gestion apte à fournir à l'équipement mobile l'application ou une mise à jour de ladite application par téléchargement dans ledit équipement.

2. Méthode selon la revendication 1, **caractérisée en ce que** l'ensemble de données stockées dans le module de sécurité correspond à une adresse IP d'un serveur du centre de gestion apte à fournir au moins une application de sécurité servant à protéger les données des services de télévision mobile diffusés.

3. Méthode selon la revendication 2 **caractérisée en ce que** l'adresse IP est enregistrée dans le module de sécurité lors de la fabrication respectivement lors des étapes de personnalisation dudit module.

4. Méthode selon les revendications 1 à 3 **caractérisée en ce que** l'adresse IP stockée dans le module de sécurité est spécifique audit module de sécurité selon le fabricant, le modèle ou la version.

5. Méthode selon les revendications 1 à 4, **caractérisée en ce que** l'application à télécharger dans l'équipement mobile, via l'adresse IP du module de sécurité, est spécifique soit au type et/ou la version du module de sécurité, soit au modèle et/ou la version de l'équipement mobile ou aux deux caractéristiques à la fois.

6. Méthode selon les revendications 1 à 5, **caractérisée en ce que** l'application est mise à jour après interrogation de l'équipement mobile par le centre de gestion, en fonction des données d'identification de l'équipement et du module de sécurité.

7. Méthode selon les revendications 1 à 5 **caractérisée en ce que** l'application installée dans l'équipement mobile vérifie automatiquement, à des périodes prédéterminées, la disponibilité de mises à jour, via l'adresse IP stockée dans le module de sécurité, afin de les télécharger le cas échéant.

8. Méthode selon les revendications 1 à 5 **caractérisée en ce que** le centre de gestion transmet à l'équipement mobile un message contenant des informations de version sur les mises à jour disponibles, le module de sécurité compare les informations de version du message avec les informations relatives à l'application installée dans l'équipement mobile afin d'initier le téléchargement, via l'adresse IP, si la version disponible est supérieure à la version installée.

9. Méthode selon les revendications 1 à 8 **caractérisée en ce que** le module de sécurité vérifie la mise à jour chargée en comparant une signature de ladite mise à jour générée par ledit module de sécurité avec une signature fournie par le centre de gestion, et en cas de différence, le module de sécurité restreint ou bloque des fonctions de l'équipement mobile.

10. Méthode selon la revendication 9 **caractérisée en ce que** le module de sécurité engendre l'envoi de messages courts au centre de gestion lorsque la comparaison montre une différence.

11. Module de sécurité pour équipement mobile destiné à recevoir des données numériques de services de télévision mobile diffusés **caractérisé en ce qu'**il comprend une mémoire dans laquelle est stocké au moins un ensemble de données désignant un serveur d'un centre de gestion apte à fournir à l'équipement mobile une application ou une mise à jour de ladite application par téléchargement dans ledit équipement.

12. Module de sécurité selon la revendication 11 **caractérisé en ce que** l'ensemble de données représente une adresse IP d'un serveur apte à fournir au moins une application de sécurité servant à protéger les données des services de télévision mobile diffusés.
